(19) Europäisches Patentamt
European Patent Office
Office européen des brevets

(11) EP 2 728 651 B1

(12) **EUROPEAN PATENT SPECIFICATION**

(45) Date of publication and mention of the grant of the patent:
**28.02.2018 Bulletin 2018/09**

(21) Application number: **13186426.6**

(22) Date of filing: **27.09.2013**

(51) Int Cl.:
***H01M 4/02*** *(2006.01)* ***H01M 4/131*** *(2010.01)*
***H01M 4/136*** *(2010.01)* ***H01M 4/62*** *(2006.01)*
*H01M 4/04 (2006.01)* *H01M 4/1391 (2010.01)*
*H01M 4/1397 (2010.01)* *H01M 4/525 (2010.01)*
*H01M 4/58 (2010.01)* *H01M 4/66 (2006.01)*
*H01M 10/0525 (2010.01)* *H01M 10/42 (2006.01)*

(54) **Positive electrode for rechargeable lithium battery and rechargeable lithium battery including same**

Positive Elektrode für eine wiederaufladbare Lithiumbatterie und wiederaufladbare Lithiumbatterie damit

Électrode positive pour batterie au lithium rechargeable et batterie au lithium rechargeable la comprenant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.11.2012 US 201261721353 P**
**11.09.2013 US 201314024545**

(43) Date of publication of application:
**07.05.2014 Bulletin 2014/19**

(73) Proprietor: **Samsung SDI Co., Ltd.**
**Yongin-si, Gyeonggi-do (KR)**

(72) Inventors:
- **Jeoung, Jin-Man**
**Yongin-si, Gyeonggi-do (KR)**
- **Sheem, Kyeu-Yoon**
**Yongin-si, Gyeonggi-do (KR)**

(74) Representative: **Gulde & Partner**
**Patent- und Rechtsanwaltskanzlei mbB**
**Wallstraße 58/59**
**10179 Berlin (DE)**

(56) References cited:
**JP-A- 2004 296 431** **JP-A- 2007 103 069**
**JP-A- 2008 112 594** **JP-A- 2010 267 878**
**US-A1- 2006 269 802** **US-A1- 2007 148 541**
**US-A1- 2008 020 280** **US-B2- 7 361 431**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 728 651 B1

## Description

The present invention relates to a positive electrode for a rechargeable lithium battery and a rechargeable lithium battery including the same.

## Description of the Related Art

In recent times, due to reductions in size and weight of portable electronic equipments, and popularization of portable electronic devices, researches on rechargeable lithium batteries having high energy density for power source of portable electronic devices has been actively undertaken.

Rechargeable lithium batteries include a negative electrode, a positive electrode, and an electrolyte, and generate electrical energy by oxidation and reduction reactions when lithium ions are intercalated/deintercalated in the positive electrode and negative electrode.

Such rechargeable lithium batteries use a lithium metal, a carbon-based material, Si, and the like for a negative active material.

For a positive active material of rechargeable lithium batteries, metal chalcogenide compounds being capable of intercalating and deintercalating lithium ions, and for example, composite metal oxide such as $LiCoO_2$, $LiMn_2O_4$, $LiNiO_2$, $LiNi_{1-x}Co_xO_2$ ($0<x<1$), $LiMnO_2$, and the like have been used.

Recently, rechargeable lithium batteries having high power characteristics have been actively investigated in order to use them as batteries for vehicles. A positive electrode according to prior art is disclosed in JP 2008 112594 A.

## SUMMARY OF THE INVENTION

An exemplary embodiment of the present invention provides a positive electrode for a rechargeable lithium battery exhibiting good high rate characteristics and cycle-life characteristics.

Another embodiment of the present invention provides a rechargeable lithium battery including the positive electrode.

According to the embodiment, a positive electrode for a rechargeable lithium battery is provided, including a current collector; and a positive active mass layer formed on the current collector. The positive active mass layer consists of a positive active material, activated carbon, a conductive material, and a binder, wherein a ratio of a density of the positive active mass layer and a thickness of the positive active mass layer fulfils the condition: $0.025 \leq$ density of the active mass layer (g/cm$^3$) / thickness of the active mass layer ($\mu$m) $\leq 0.2$, wherein the density of the active mass layer is 1.5 g/cm$^3$ to 4 g/cm$^3$, and wherein a total amount of the positive active material and activated carbon is 85 wt% to 98 wt % based on the total weight of the positive active material layer, and wherein the conductive material is one selected from carbon-based materials and an amount of the conductive material is 1 wt% to 10 wt% based on the total weight of the positive active material layer. The thickness of the active mass layer may be 10 $\mu$m to 200 $\mu$m, in another embodiment, 30 $\mu$m to 200 $\mu$m.

According to another embodiment, a rechargeable lithium battery is provided, including the positive electrode, a negative electrode including a negative active material; and an electrolyte including an organic solvent and a lithium salt.

Preferably, the positive active material is a composite oxide of lithium and at least one of cobalt, manganese and nickel.

A total amount of the positive active material and activated carbon, is 85 wt% to 98 wt% based on the total weight of the positive active material layer. A mixing ratio of the positive active material and the activated carbon may be 80 : 20 to 90 : 10 weight ratio.

According to another preferred embodiment, an amount of the binder is 1 wt% to 10 wt% based on the total weight of the positive active material layer. The binder may be at least one compound selected from the group comprising polyvinyl alcohol, carboxylmethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin and nylon. The amount of the conductive material is 1 wt% to 10 wt% based on the total weight of the positive active material layer. The conductive material is one compound selected from carbon-based materials.

The current collector may be made of Al.

The positive electrode of the embodiment exhibits rapid input and output characteristics at high rates, and may provide rechargeable lithium batteries exhibiting excellent cycle-life characteristics.

## BRIEF DESCRIPTION OF THE DRAWINGS

FIG. 1 is a schematic view showing a structure of rechargeable lithium battery cell according to one embodiment.
FIG. 2 is a graph showing voltage results according to cycles of the rechargeable lithium cells of Example 1 and Comparative Example 1.

## DETAILED DESCRIPTION OF THE INVENTION

Exemplary embodiments of this disclosure will hereinafter be described in detail. A positive electrode includes a current collector, and a positive active mass layer formed on the current collector. The positive active mass layer includes a positive active material, activated carbon, a conductive material and a binder. In the rechargeable lithium battery, the active mass generally refers to a mixture of an active material, a conductive material, and a binder, and in the present invention, the active mass refers to a mixture of the positive active material, the activated carbon, the conductive material, and the binder.

The active mass density of the positive active mass layer (g/cm$^3$) and the thickness ($\mu$m) is satisfied by the condition of Equation 1.

[Equation 1]

$$0.025 \leq \text{active mass density of the active mass layer } (g/cm^3) / \text{thickness of the active mass layer } (\mu m) \leq 0.2$$

When the ratio of the active mass density of the positive active mass layer and the thickness of the positive active mass layer fall into the condition of Equation 1, a rechargeable lithium battery exhibiting very rapid input and output characteristics at high rates and desired capacity may be provided.

In the embodiment of the present invention, the active mass density of the active mass layer is 1.5 g/cm$^3$ to 4 g/cm$^3$. When the active mass density of the active mass layer falls into the above range, it may provide a battery exhibiting improved capacity.

Furthermore, the thickness of the active mass layer may be 10 $\mu$m to 200 $\mu$m, and in another embodiment, the thickness may be 30 $\mu$m to 200 $\mu$m. When the thickness of the active mass layer is included in the above range, it is more desirable in that it may provide a battery having the suitable battery capacity and rapid input and output characteristics.

As a result, it is desirable that when the active mass density and the thickness of the active mass layer satisfy the condition of Equation 1, they are included in the above ranges.

Generally, as the active mass density in the positive active mass increases, the capacity increases, but extremely high density may not be suitable. In particular, increases in a loading level (amount of a positive active material per unit area) may causes deterioration of the output characteristics. Furthermore, as the thickness of the active mass layer decreases, the input and output characteristics at high rates may be improved, but extremely low thickness causes capacity fading. Thus, the present invention suitably controls the active mass density and the thickness of the active mass layer, and controls the active mass density and the thickness of the active mass layer in the condition of Equation 1, in order to improve the capacity and input and output characteristics at high rates.

The positive electrode for a rechargeable lithium battery having the component according to one embodiment may be effectively used for ISG (idle stop and go) among the batteries in vehicles that are used to increase gas mileage and reduce $CO_2$ output. The general batteries for ISG are those that which stop start-up when the car is stopped, and start the car when needed, and the batteries require very rapid reaction speed since the starting of the car is only occurs for a short time. Furthermore, the battery is required to generally maintain the full-charge state while driving, and requires good power characteristics at a low temperature.

The positive electrode according to the present invention includes an active mass together with the positive active material in the positive active mass layer so that the advantages of the rechargeable lithium battery and the advantages of the super capacity are both obtained, thereby providing batteries exhibiting rapid input and output current characteristics and long cycle-life characteristics. Furthermore, since the active mass density and the thickness of the positive active mass layer are satisfied by the condition of Equation 1, it may exhibit rapid input and output characteristics

at high rates and high capacity.

The positive active material may include a compound that reversibly intercalates and deintercalates lithium (a lithiated intercalation compound). Specifically, a composite oxide of at least one of cobalt, manganese, nickel, or a combination thereof, and lithium may be used. Exemplary may be compounds represented by the following formulae:

$Li_aA_{1-b}X_bD_2$ ($0.90 \leq a \leq 1.8$, $0 \leq b \leq 0.5$); $Li_aA_{1-b}X_bO_{2-c}D_c$ ($0.90 \leq a \leq 1.8$, $0 \leq b \leq 0.5$, $0 \leq c \leq 0.05$); $Li_aE_{1-b}X_bO_{2-c}D_c$ ($0.90 \leq a \leq 1.8$, $0 \leq b \leq 0.5$, $0 \leq c \leq 0.05$); $Li_aE_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cD_\alpha$ ($0.90 \leq a \leq 1.8$, $0 \leq b \leq 0.5$, $0 \leq c \leq 0.5$, $0 < \alpha \leq 2$); $Li_aNi_{1-b-c}Co_bX_cO_{2-\alpha}T_\alpha$ ($0.90 \leq a \leq 1.8$, $0 \leq b \leq 0.5$, $0 \leq c \leq 0.05$, $0 < \alpha < 2$); $Li_aNi_{1-b-c}Co_bX_cO_{2-\alpha}T_2$ ($0.90 \leq a \leq 1.8$, $0 \leq b \leq 0.5$, $0 \leq c \leq 0.05$, $0 < \alpha < 2$); $Li_aNi_{1-b-c}Mn_bX_cD_\alpha$ ($0.90 \leq a \leq 1.8$, $0 \leq b \leq 0.5$, $0 \leq c \leq 0.05$, $0 < \alpha \leq 2$); $Li_aNi_{1-b-c}Mn_bX_cO_{2-\alpha}T_\alpha$ ($0.90 \leq a \leq 1.8$, $0 \leq b \leq 0.5$, $0 \leq c \leq 0.05$, $0 < \alpha < 2$); $Li_aNi_{1-b-c}Mn_bX_cO_{2-\alpha}T_2$ ($0.90 \leq a \leq 1.8$, $0 \leq b \leq 0.5$, $0 \leq c \leq 0.05$, $0 < \alpha < 2$); $Li_aNi_bE_cG_dO_2$ ($0.90 \leq a \leq 1.8$, $0 \leq b \leq 0.9$, $0 \leq c \leq 0.5$, $0.001 \leq d \leq 0.1$); $Li_aNi_bCO_cMn_dG_eO_2$ ($0.90 \leq a \leq 1.8$, $0 \leq b \leq 0.9$, $0 \leq c \leq 0.5$, $0 \leq d \leq 0.5$, $0.001 \leq e \leq 0.1$); $Li_aNiG_bO_2$ ($0.90 \leq a \leq 1.8$, $0.001 \leq b \leq 0.1$) $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $QO_2$; $QS_2$; $LiQS_2$; $V_2O_5$; $LiV_2O_5$; $LiZO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $Li_aFePO_4$ ($0.90 \leq a \leq 1.8$)

In the above formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound. For example, the method may include any coating method such as spray coating, dipping, and the like, but is not illustrated in more detail since it is well-known to those who work in the related field.

In the positive active mass layer, the total amount of the positive active material and activated carbon is included in a ratio of 85 wt% to 98 wt% based on the total weight of the positive active material layer. In the positive active mass layer, the mixing ratio of the positive active material and the activated carbon may be 80 : 20 to 95 : 5 in weight ratio in 85 wt% to 98 wt% of the total amount of the positive active material and activated carbon.

Furthermore, the binder and conductive material may be respectively included in an amount ranging from 1 wt% to 10 wt% based on the total weight of the positive active material layer. The binder improves binding properties of the positive active material particles to each other and to a current collector. Examples of the binder include polyvinyl alcohol, carboxylmethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, and nylon. The conductive material provides an electrode with conductivity. Any electrically conductive material may be used as the conductive material unless it causes a chemical change. Examples of the conductive material include a carbon-based material such as natural graphite, artificial graphite, carbon black, acetylene black, ketjen black, a carbon fiber, and the like; a metal-based material such as metal powder or metal fiber including copper, nickel, aluminum, silver, and the like; a conductive polymer such as a polyphenylene derivative; or a mixture thereof.

The current collector may be Al.

The positive electrode may be fabricated by mixing the positive active material, the conductive material, and the binder in a solvent to prepare an active material composition, and coating the active material composition on the current collector. The solvent may be N-methyl pyrrolidone.

Another embodiment of the present invention provides a rechargeable lithium battery including the positive electrode, a negative electrode including a negative active material and an electrolyte. The rechargeable lithium battery may include a separator between the positive electrode and the negative electrode, and may also include a battery case. That is, a rechargeable lithium battery according to one embodiment includes the positive electrode, the separator, the negative electrode, and the electrolyte positioned in the battery case.

At this time, the positive electrode, the separator and the negative electrode may be spiral-wound (winding) to

form a jellyroll shape, and the volume of thereof (volume of the positive electrode, the separator, and the negative electrode) may be 80 volume% to 100 volume% based on the total volume of the battery case, that is, the packing ratio may be 80 volume% to 100 volume%. In the specification, the total volume of the battery case refers to that before assembling the battery, or the total volume of the battery case that is increased due to the initial charge and discharge (e.g., the volume may be increased to about 105 volume% based on 100 volume% of the initial volume of the battery case).

When the packing ratio falls into the above range, it is available to fabricate batteries with optimum capacity, and it may be effectively suppress the shaking of the jellyroll in the battery case, so that the modification of the jellyroll may not occur, thereby preventing deterioration of the battery performance.

The negative electrode includes a current collector and a negative active mass layer, i.e., a negative active material layer, disposed on the current collector, and the negative active material layer includes a negative active material.

The negative active material includes a material that reversibly intercalates/deintercalates lithium ions, a lithium metal, a lithium metal alloy, a material being capable of doping/dedoping lithium, or a transition metal oxide.

The material that can reversibly intercalate/deintercalate lithium ions includes a carbon material. The carbon material may be any carbon-based negative active material that is generally used in a lithium ion rechargeable battery. Examples of the carbon material include crystalline carbon, amorphous carbon, and mixtures thereof. The crystalline carbon may be non-shaped, or sheet-, flake-, spherical-, or fiber-shaped natural graphite or artificial graphite. The amorphous carbon may be a soft carbon, a hard carbon, a mesophase pitch carbonization product, fired coke, and the like.

Examples of the lithium metal alloy include lithium and an element selected from Na, K, Rb, Cs, Fr, Be, Mg, Ca, Sr, Si, Sb, Pb, In, Zn, Ba, Ra, Ge, Al, and Sn. The material being capable of doping/dedoping lithium may include Si, a Si-C composite, $SiO_x$ ($0 < x < 2$), a Si-Q alloy (wherein Q is an element selected from an alkali metal, an alkaline-earth metal, a Group 13 element, a Group 14 element, a Group 15 element, a Group 16 element, a transition element, a rare earth element, and a combination thereof, and is not Si), Sn, $SnO_2$, a Sn-R alloy (wherein R is an element selected from an alkali metal, an alkaline-earth metal, a Group 13 element, a Group 14 element, a Group 15 element, a Group 16 element, a transition element, a rare earth element, and a combination thereof, and is not Sn), and the like. At least one of these materials may be mixed with $SiO_2$. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh,

Ir, Pd, Pt, Cu, Ag, Au, Zn, Cd, B, Al, Ga, Sn, In, Tl, Ge, P, As, Sb, Bi, S, Se, Te, Po, and a combination thereof.

The transition metal oxide includes vanadium oxide, lithium vanadium oxide, and the like.

In the negative active material layer, the negative active material may be included in an amount of 95 wt% to 99 wt% based on the total weight of the negative active material layer.

The negative active material layer may include a binder, and optionally a conductive material. The negative active material layer may include 1 wt% to 5 wt% of a binder based on the total weight of the negative active material layer. When the negative active material layer includes a conductive material, the negative active material layer includes 90 wt% to 98 wt% of the negative active material, 1 wt% to 5 wt% of the binder, and 1 wt% to 5 wt% of the conductive material.

The binder improves binding properties of negative active material particles with one another and with the current collector. The binder includes a non-water-soluble binder, a water-soluble binder, or a combination thereof.

The non-water-soluble binder includes polyvinylchloride, carboxylated polyvinylchloride, polyvinyl fluoride, an ethylene oxide-containing polymer, polyvinylpyrrolidone, polyurethane, polytetrafluoroethylene, polyvinylidene fluoride, polyethylene, polypropylene, polyamideimide, polyimide, or a combination thereof.

The water-soluble binder includes a styrene-butadiene rubber, an acrylated styrene-butadiene rubber, polyvinyl alcohol, sodium polyacrylate, a copolymer of propylene and a C2 to C8 olefin, a copolymer of (meth)acrylic acid and (meth)acrylic acid alkyl ester, or a combination thereof.

When the water-soluble binder is used as a negative electrode binder, a cellulose-based compound may be further used to provide viscosity. The cellulose-based compound includes one or more of carboxylmethyl cellulose, hydroxypropylmethyl cellulose, methyl cellulose, or alkali metal salts thereof. The alkali metal may be Na, K, or Li. The cellulose-based compound may be included in an amount of 0.1 to 3 parts by weight based on 100 parts by weight of the negative active material.

The conductive material is included to provide electrode conductivity. Any electrically conductive material may be used as a conductive material unless it causes a chemical change. Examples of the conductive material include carbon-based materials such as natural graphite, artificial graphite, carbon black, acetylene black, ketjen black, carbon fibers, and the like; metal-based materials of metal powder or metal fiber including copper, nickel, aluminum, silver, and the like; conductive polymers such as polyphenylene derivatives; or a mixture thereof.

The current collector may include one selected from a copper foil, a nickel foil, a stainless steel foil, a titanium foil, a nickel foam, a copper foam, a polymer substrate coated with a conductive metal, and a combination thereof.

The negative electrode may be fabricated by mixing the negative active material, the binder, and optionally the conductive material to prepare an active material composition and coating the composition on a current collector. The electrode-manufacturing method is well known and thus is not described in detail in the present specification. The solvent

may include N-methylpyrrolidone and the like. When the negative electrode includes a water-soluble binder, the negative active material composition may use water as a solvent.

The electrolyte includes an organic solvent and a lithium salt.

The organic solvent serves as a medium for transmitting ions taking part in the electrochemical reaction of a battery.

The organic solvent may include a carbonate-based, ester-based, ether-based, ketone-based, alcohol-based, or aprotic solvent. The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, methylpropionate, ethylpropionate, γ-butyrolactone, decanolide, valerolactone, mevalonolactone, caprolactone and the like. The ether-based solvent includes dibutyl ether, tetraglyme, diglyme, dimethoxyethane, 2-methyltetrahydrofuran, tetrahydrofuran, or the like, and the ketone-based solvent includes cyclohexanone, or the like. The alcohol-based solvent include ethyl alcohol, isopropyl alcohol, and the like, and the aprotic solvent include nitriles such as R-CN (wherein R is a C2 to C20 linear, branched, or cyclic hydrocarbon group, or includes a double bond, an aromatic ring, or an ether bond), amides such as dimethylformamide, dioxolanes such as 1,3-dioxolane, sulfolanes, or the like.

The organic solvent may be used singularly or in a mixture. When the organic solvent is used in a mixture, the mixture ratio can be controlled in accordance with desirable battery performance.

The carbonate-based solvent may be used by mixing a cyclic carbonate and a linear carbonate. The cyclic carbonate and the linear carbonate are mixed together in the volume ratio of 1:1 to 1:9. Within this range, performance of the electrolyte may be improved.

The organic electrolyte may be further prepared by mixing a carbonate-based solvent with an aromatic hydrocarbon-based solvent. The carbonate-based and the aromatic hydrocarbon-based solvents may be mixed together in a volume ratio ranging from 1:1 to 30:1.

The aromatic hydrocarbon-based organic solvent may be represented by the following Chemical Formula 1.

[Chemical Formula 1]

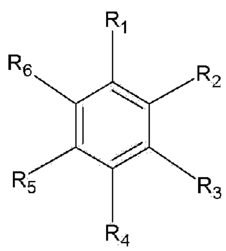

In Chemical Formula 1, $R_1$ to $R_6$ are each independently selected from hydrogen, a halogen, a C1 to C10 alkyl group, a C1 to C10 haloalkyl group, and a combination thereof.

The aromatic hydrocarbon-based organic solvent may include benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof. The non-aqueous electrolyte may further include vinylene carbonate, or an ethylene carbonate-based compound represented by the following Chemical Formula 2 to improve cycle-life.

[Chemical Formula 2]

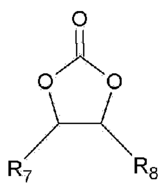

In Chemical Formula 2, $R_7$ and $R_8$ are independently selected from hydrogen, a halogen, a cyano group (CN), a nitro group ($NO_2$), and a C1 to C5 fluoroalkyl group, provided that at least one of $R_7$ and $R_8$ is selected from a halogen, a cyano group (CN), a nitro group ($NO_2$), and a C1 to C5 fluoroalkyl group.

Examples of the ethylene carbonate-based compound include difluoro ethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like. The amount of the vinylene carbonate or the ethylene carbonate-based compound used to improve cycle life may be adjusted within an appropriate range.

The electrolyte may be a borate-based compound as an additive for improving the power characteristics. The borate-based compound may be tris(trimethylsilyl) borate (TMSB), etc.. The used amount of the borate-based compound may be suitably controlled.

The lithium salt is dissolved in an organic solvent, supplies lithium ions in a battery, operates a basic operation of the rechargeable lithium battery, and improves lithium ion transportation between positive and negative electrodes therein. Examples of the lithium salt include $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $LiC_4F_9SO_3$, $LiClO_4$, $LiAlO_2$, $LiAlCl_4$, $LiN(C_xF_{2x+1}SO_2)(C_yF_{2y+1}SO_2)$(where x and y are natural numbers and an integer of 1 to 20), LiCl, LiI, $LiB(C_2O_4)_2$ (lithium bis(oxalato) borate, LiBOB), or a combination thereof, as a supporting electrolytic salt. The lithium salt may be used in a concentration ranging from 0.1 M to 2.0 M. When the lithium salt is included in the above concentration range, an electrolyte may have excellent performance and lithium ion mobility due to optimal electrolyte conductivity and viscosity.

The separator may include polyethylene, polypropylene, polyvinylidene fluoride, or a multilayer of two or more layers thereof, and it may also include a mixed multilayer such as a polyethylene/polypropylene 2-layered separator, a polyethylene/polypropylene/polyethylene 3-layered separator, a polypropylene/polyethylene/polypropylene 3-layered separator, or the like.

FIG. 1 is a schematic view showing the representative structure of a rechargeable lithium battery according to one embodiment. As shown in FIG. 1, the rechargeable lithium battery 1 includes a positive electrode 2, a negative electrode 4, and a separator 3 interposed between the positive electrode 2 and negative electrode 4, an electrolyte immersed therein, a battery case 5, and a sealing member 6 sealing the battery case 5. The following examples illustrate the present invention in more detail.

(Example 1)

85 wt% of $LiCoO_2$, 5 wt% of activated carbon, 4 wt% of denka black, 6 wt% of polyvinylidene fluoride (product name: Solef 6020, manufacturer: Solvay) were mixed in an N-methyl pyrrolidone solvent to prepare a positive active material slurry.

The positive active material slurry was coated on an Al foil with a thickness of 15 $\mu$m, dried at 100 °C, and then pressed to fabricate a positive electrode with an active mass layer (positive active material layer) having an active mass density of 2.6 g/cm$^3$. The thickness of the active mass layer was 35 $\mu$m. Thus, the ratio of the active mass density of the active mass layer/the thickness was about 0.074.

92 wt% of soft carbon, 5 wt% of denka black, and 3 wt% of a mixture of styrene-butyrene rubber and carboxymethyl cellulose (2 : 1 weight ratio) were mixed in a water solvent to prepare a negative active material slurry.

The negative active material slurry was coated on a Cu foil with a thickness of 10 $\mu$m, dried at 100 °C, and then pressed to fabricate a negative electrode with an active mass layer (negative active material layer) having an active mass density of about 1 g/ cm$^3$, and having a loading level (L/L) of about 4.95g/cm$^2$.

A separator was inserted between the positive and negative electrodes, and the resultant was wound in the form of a cylinder type, to produce a jellyroll shape. As the separator, a 3-layer film of polyethylene/polypropylene/polyethylene having a thickness of 25 $\mu$m was used.

The obtained jellyroll was put into an 18650-size battery case, and 50g of an electrolyte was injected therein, to fabricate a rechargeable lithium cell. As the electrolyte, one in which 0.5 wt% of tris(trimethylsilyl) borate was added to 1.15 M $LiPF_6$ dissolved in a mixed solution of ethylene carbonate, ethylmethyl carbonate, and dimethyl carbonate (2:4:4 volume ratio) was used. At this time, the volume of the jellyroll (positive electrode, negative electrode and separator) was set to about 92 volume% to about 94 volume% based on the total of 100 volume% of the battery case.

(Example 2)

85 wt% of $LiNi_{1,3}Co_{1/3}Mn_{1/3}O_2$, 5 wt% of activated carbon, 4 wt% of denka black, 6 wt% of polyvinylidene fluoride (product name: Solef 6020, manufacturer: Solvay) were mixed in an N-methyl pyrrolidone solvent to prepare a positive active material slurry.

The positive active material slurry was coated on an Al foil with a thickness of 15 $\mu$m, dried at 100 °C, and then pressed to fabricate a positive electrode with an active mass layer (positive active material layer) having an active mass

density of 2.4 g/cm$^3$. The thickness of the active mass layer was 40 μm. Thus, the ratio of the active mass density of the active mass layer/the thickness was about 0.06.

92 wt% of soft carbon, 5 wt% of denka black, and 3 wt% of a mixture of styrene-butyrene rubber and carboxymethyl cellulose (2 : 1 weight ratio) were mixed in a water solvent to prepare a negative active material slurry.

The negative active material slurry was coated on a Cu foil with a thickness of 10 μm, dried at 100 °C, and then pressed to fabricate a negative electrode with an active mass layer (negative active material layer) having an active mass density of about 1 g/ cm$^3$, and having a loading level (L/L) of about 4.95g/ cm$^2$.

A separator was inserted between the positive and negative electrodes, and the resultant was wound in the form of a cylinder type, to produce a jellyroll shape. As the separator, a 3-layer film of polyethylene/polypropylene/polyethylene having a thickness of 25 μm was used.

The obtained jellyroll was put into an 18650-size battery case, and 50g of an electrolyte was injected therein, to fabricate a rechargeable lithium cell. As the electrolyte, one in which 0.5 wt% of tris(trimethylsilyl) borate was added to 1.15 M $LiPF_6$ dissolved in a mixed solution of ethylene carbonate, ethylmethyl carbonate, and dimethyl carbonate (2:4:4 volume ratio) was used. At this time, the volume of the jellyroll (positive electrode, negative electrode and separator) was set to about 92 volume% to about 94 volume% based on the total of 100 volume% of the battery case.

(Example 3)

85 wt% of $LiFePO_4$, 5 wt% of activated carbon, 4 wt% of denka black, 6 wt% of polyvinylidene fluoride (product name: Solef 6020, manufacturer: Solvay) were mixed in an N-methyl pyrrolidone solvent to prepare a positive active material slurry.

The positive active material slurry was coated on an Al foil with a thickness of 15 μm, dried at 100 °C, and then pressed to fabricate a positive electrode with an active mass layer (positive active material layer) having an active mass density of 1.9 g/cm$^3$. The thickness of the active mass layer was 45 μm. Thus, the ratio of the active mass density of the active mass layer/the thickness was about 0.042.

92 wt% of soft carbon, 5 wt% of denka black, and 3 wt% of a mixture of styrene-butyrene rubber and carboxymethyl cellulose (2 : 1 weight ratio) were mixed in a water solvent to prepare a negative active material slurry.

The negative active material slurry was coated on a Cu foil with a thickness of 10 μm, dried at 100 °C, and then pressed to fabricate a negative electrode with an active mass layer (negative active material layer) having an active mass density of about 1 g/ cm$^3$, and having a loading level (L/L) of about 5.94g/ cm$^2$.

A separator was inserted between the positive and negative electrodes, and the resultant was wound in the form of a cylinder type, to produce a jellyroll shape. As the separator, a 3-layer film of polyethylene/polypropylene/polyethylene having a thickness of 25 μm was used.

The obtained jellyroll was put into an 18650-size battery case, and 50g of an electrolyte was injected therein, to fabricate a rechargeable lithium cell. As the electrolyte, one in which 0.5 wt% of tris(trimethylsilyl) borate was added to 1.15 M $LiPF_6$ dissolved in a mixed solution of ethylene carbonate, ethylmethyl carbonate, and dimethyl carbonate (2:4:4 volume ratio) was used. At this time, the volume of the jellyroll (positive electrode, negative electrode and separator) was set to about 92 volume% to about 94 volume% based on the total of 100 volume% of the battery case.

(Comparative Example 1)

A rechargeable lithium cell was fabricated by the same procedure as in Example 1, except that the positive active material slurry produced in Example 1 was coated on an Al foil with a thickness of 15 μm, dried, and then pressed to fabricate a positive electrode with an active mass layer (positive active material layer) having an active mass density of 2.6 g/cm$^3$ and a thickness of the active mass layer of 200 μm. In the positive electrode, the ratio of the active mass of the active mass layer/ thickness of the active mass layer was about 0.013.

(Comparative Example 2)

A rechargeable lithium cell was fabricated by the same procedure as in Example 1, except that the positive active material slurry produced in Example 3 was coated on an Al foil with a thickness of 15 μm, dried, and then pressed to fabricate a positive electrode with an active mass layer (positive active material layer) having an active mass density of 1.9 g/cm$^3$ and a thickness of the active mass layer of 107 μm. In the positive electrode, the ratio of the active mass density of the active mass layer/ thickness of the active mass layer was about 0.018.

Two cells of each of Example 1 and Comparative Example 1 were charged and discharged at 30C for 150,000 cycles, and the results are shown in FIG. 2 as indicated in Example 1(a), Example 1(b), Comparative Example 1(a) and Comparative Example 1(b).

While charging at high rates, a voltage reaching 4.2 V indicates the stop of the cycle-life, where the charge and

the discharge do not occur. As shown in FIG. 2, the rechargeable lithium cells according to Examples 1 did not reached 4.2 V even though the charge and discharge were performed for 150,000 cycles, so it can be shown from the result that the cycle-life may be better maintained. However, the cells according to Comparative Example 1 reached 4.2 V at the 30,000$^{th}$ charge and discharge cycle so that the cycle-life of the cell was stopped at 30,000 cycles. Thus, the rechargeable lithium cells according to Example 1 exhibited surprisingly improved cycle-life characteristics, compared to the cells according to Comparative Example 1.

Two cells in each of Examples 1 to 3 and Comparative Example 2 were charged and discharged while the C-rate was varied, i.e., charged and discharged at 1C, 10C, 30C, and 50C, once at the C-rate. The discharge capacity was measured and the results are shown in Table 1. Furthermore, the charge capacity was measured and the results are shown in Table 2. Furthermore, the ratios of the discharge capacity at 50C to the discharge capacity at 1C are shown in Table 1, and the ratios of the charge capacity at 50C to the charge capacity at 1C are shown in Table 2.

Table 1

| Discharge | 1C[Ah] | 10C[Ah] | 30C[Ah] | 50C[Ah] | 50C/1C(%) |
|---|---|---|---|---|---|
| Example 1 | 4.1 | 3.9 | 3.8 | 3.7 | 92 |
| Example 1 | 4.1 | 3.9 | 3.8 | 3.7 | 92 |
| Example 2 | 4.0 | 3.8 | 3.7 | 3.6 | 91 |
| Example 2 | 4.0 | 3.8 | 3.7 | 3.6 | 91 |
| Example 3 | 3.2 | 3.1 | 2.9 | 2.8 | 87 |
| Example 3 | 3.2 | 3.1 | 2.9 | 2.8 | 87 |
| Comparative Example 2 | 3.9 | 3.1 | 2.6 | 1.4 | 37 |
| Comparative Example 2 | 3.9 | 3.1 | 2.6 | 1.4 | 38 |

Table 2

| Charge | 1C[Ah] | 10C[Ah] | 30C[Ah] | 50C[Ah] | 50C/1C(%) |
|---|---|---|---|---|---|
| Example 1 | 4.0 | 3.7 | 3.3 | 2.9 | 72 |
| Example 1 | 4.0 | 3.7 | 3.3 | 2.9 | 72 |
| Example 2 | 3.9 | 3.7 | 3.4 | 3.1 | 80 |
| Example 2 | 3.9 | 3.7 | 3.4 | 3.1 | 80 |
| Example 3 | 3.2 | 3.0 | 2.8 | 2.6 | 80 |
| Example 3 | 3.2 | 3.0 | 2.8 | 2.6 | 81 |
| Comparative Example 2 | 3.8 | 2.9 | 2.4 | 1.4 | 37 |
| Comparative Example 2 | 3.8 | 2.9 | 2.4 | 1.4 | 37 |

As shown in Tables 1 and 2, the rechargeable lithium cells according to Examples 1 to 3 exhibited good charge and discharge characteristics at high rates, compared to that according to Comparative Example 2.

## Claims

1. A positive electrode (2) for a rechargeable lithium battery (1) comprising:

   a current collector; and
   a positive active mass layer formed on the current collector, the positive active mass layer consists of a positive active material, activated carbon, a conductive material, and a binder, wherein a ratio of a density of the positive active mass layer and a thickness of the positive active mass layer fulfills the condition: $0.025 \leq$ density of the active mass layer ($g/cm^3$) / thickness of the active mass layer ($\mu m$) $\leq 0.2$,
   wherein the density of the active mass layer is 1.5 g/ $cm^3$ to 4 g/ $cm^3$, and

wherein a total amount of the positive active material and activated carbon is 85 wt% to 98 wt% based on the total weight of the positive active material layer, and wherein an amount of the conductive material is 1 wt% to 10 wt% based on the total weight of the positive active material layer,
**characterized in that** the conductive material is one compound selected from a carbon-based material.

2. The positive electrode of claim 1, wherein the thickness of the active mass layer is 10 $\mu$m to 200 $\mu$m.

3. The positive electrode of claim 2, wherein the thickness of the active mass layer is 30 $\mu$m to 200 $\mu$m.

4. The positive electrode of one of the preceding claims, wherein the positive active material is a composite oxide of lithium and at least one of cobalt, manganese and nickel.

5. The positive electrode of claim 1, wherein a mixing ratio of the positive active material and the activated carbon is 80 : 20 to 95 : 5 weight ratio.

6. The positive electrode of one of the preceding claims, wherein an amount of the binder is 1 wt% to 10 wt% based on the total weight of the positive active material layer.

7. The positive electrode of one of the preceding claims, wherein the binder is at least one compound selected from the group comprising polyvinyl alcohol, carboxylmethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin and nylon.

8. The positive electrode of one of the preceding claims, wherein the current collector is made of Al.

9. A rechargeable lithium battery including the positive electrode according to one of the preceding claims, a negative electrode including a negative active material; and an electrolyte including an organic solvent and a lithium salt.

## Patentansprüche

1. Eine positive Elektrode (2) für eine wiederaufladbare Lithiumbatterie (1), aufweisend:

einen Stromkollektor; und
eine Schicht aus positiver aktiver Masse, die auf dem Stromkollektor ausgebildet ist, wobei die Schicht aus positiver aktiver Masse aus einem positiven aktiven Material, Aktivkohle, einem leitenden Material und einem Bindemittel besteht, wobei ein Verhältnis einer Dichte der Schicht aus positiver aktiver Masse und einer Dicke der Schicht aus positiver aktiver Masse die folgende Bedingung verfüllt:

$$0{,}025 \leq \text{Dichte der Schicht aus aktiver Masse (g/cm}^3\text{) / Dicke der Schicht aus aktiver Masse (}\mu\text{m)} \leq 0{,}2,$$

wobei die Dichte der Schicht aus aktiver Masse 1,5 g/cm$^3$ bis 4 g/cm$^3$ beträgt, und
wobei eine Gesamtmenge des positiven aktiven Materials und der Aktivkohle 85 Gew.-% bis 98 Gew.-%, bezogen auf das Gesamtgewicht der Schicht aus positivem aktivem Material, beträgt, und wobei eine Menge des leitenden Materials 1 Gew.-% bis 10 Gew.-%, bezogen auf das Gesamtgewicht der Schicht aus positivem aktivem Material, beträgt,
**dadurch gekennzeichnet, dass** das leitende Material eine Verbindung, die aus einem Material auf der Basis von Kohlenstoff ausgewählt ist, ist.

2. Die positive Elektrode nach Anspruch 1, wobei die Dicke der Schicht aus aktiver Masse 10 $\mu$m bis 200 $\mu$m beträgt.

3. Die positive Elektrode nach Anspruch 2, wobei die Dicke der Schicht aus aktiver Masse 30 $\mu$m bis 200 $\mu$m beträgt.

4. Die positive Elektrode nach einem der vorhergehenden Ansprüche, wobei das positive aktive Material ein Verbundoxid aus Lithium und zumindest einem von Cobalt, Mangan und Nickel ist.

5. Die positive Elektrode nach Anspruch 1, wobei ein Mischverhältnis des positiven aktiven Materials und der Aktivkohle

80:20 bis 95:5 - Gewichtsverhältnis - beträgt.

**6.** Die positive Elektrode nach einem der vorhergehenden Ansprüche, wobei eine Menge des Bindemittels 1 Gew.-% bis 10 Gew.-%, bezogen auf das Gesamtgewicht der Schicht aus positivem aktivem Material, beträgt.

**7.** Die positive Elektrode nach einem der vorhergehenden Ansprüche, wobei das Bindemittel zumindest eine Verbindung, die aus der Gruppe bestehend aus Polyvinylalkohol, Carboxymethylcellulose, Hydroxypropylcellulose, Diacetylcellulose, Polyvinylchlorid, carboxyliertem Polyvinylchlorid, Polyvinylfluorid, einem Ethylenoxid enthaltenden Polymer, Polyvinylpyrrolidon, Polyurethan, Polytetrafluorethylen, Polyvinylidenfluorid, Polyethylen, Polypropylen, einem Styrol-Butadien-Kautschuk, einem acrylierten Styrol-Butadien-Kautschuk, einem Epoxidharz und Nylon ausgewählt ist, ist.

**8.** Die positive Elektrode nach einem der vorhergehenden Ansprüche, wobei der Stromkollektor aus Al hergestellt ist.

**9.** Eine wiederaufladbare Lithiumbatterie, aufweisend die positive Elektrode nach einem der vorhergehenden Ansprüche, eine negative Elektrode, die ein negatives aktives Material aufweist; und einen Elektrolyt, der ein organisches Lösungsmittel und ein Lithiumsalz aufweist.

## Revendications

**1.** Electrode positive (2) pour une batterie au lithium rechargeable (1), comprenant :

un collecteur de courant ; et
une couche de masse active positive formée sur le collecteur de courant, la couche de masse active positive étant constituée par un matériau actif positif, du charbon actif, un matériau conducteur, et un liant, un rapport d'une densité de la couche de masse active positive et d'une épaisseur de la couche de masse active positive satisfaisant à la condition :

$0{,}025 \leq$ densité de la couche de masse active (g/m$^3$)/ épaisseur de la couche de masse active ($\mu$m) $\leq 0{,}2$,
dans laquelle la densité de la couche de masse active est comprise entre 1,5 g/cm$^3$ et 4 g/cm$^3$, et
dans laquelle une quantité totale du matériau actif positif et du charbon actif est comprise entre 85 % en poids et 98 % en poids par rapport au poids total de la couche de matériau actif positif, et
dans laquelle une quantité du matériau conducteur est comprise entre 1 % en poids et 10 % en poids par rapport au poids total de la couche de matériau actif positif,
**caractérisée en ce que** le matériau conducteur est un composé sélectionné à partir d'un matériau à base de carbone.

**2.** Electrode positive selon la revendication 1, dans laquelle l'épaisseur de la couche de masse active est comprise entre 10 $\mu$m et 200 $\mu$m.

**3.** Electrode positive selon la revendication 2, dans laquelle l'épaisseur de la couche de masse active est comprise entre 30 $\mu$m et 200 $\mu$m.

**4.** Electrode positive selon l'une des revendications précédentes, dans laquelle le matériau actif positif est un oxyde composite de lithium et d'au moins l'un parmi le cobalt, le manganèse et le nickel.

**5.** Electrode positive selon la revendication 1, dans laquelle un rapport de mélange du matériau actif positif et du charbon actif est un rapport en poids compris entre 80:20 et 95:5.

**6.** Electrode positive selon l'une des revendications précédentes, dans laquelle une quantité du liant est comprise entre 1 % en poids et 10 % en poids par rapport au poids total de la couche de matériau actif positif.

**7.** Electrode positive selon l'une des revendications précédentes, dans laquelle le liant est au moins un composé sélectionné parmi le groupe comprenant le poly(alcool de vinyle), la carboxyméthylcellulose, l'hydroxypropylcellulose, la diacétylcellulose, le poly(chlorure de vinyle), le poly(chlorure de vinyle) carboxylé, le poly(fluorure de vinyle), un polymère contenant de l'oxyde d'éthylène, la polyvinylpyrrolidone, le polyuréthane, le polytétrafluor-éthylène, le poly(fluorure de vinylidène), le polyéthylène, le polypropylène, un caoutchouc de styrène-butadiène, un caoutchouc

de styrène-butadiène acrylé, une résine époxy et le Nylon.

**8.** Electrode positive selon l'une des revendications précédentes, dans laquelle le collecteur de courant est réalisé en Al.

**9.** Batterie au lithium rechargeable comprenant l'électrode positive selon l'une des revendications précédentes, une électrode négative comprenant un matériau actif négatif ; et un électrolyte comprenant un solvant organique et un sel de lithium.

FIG. 1

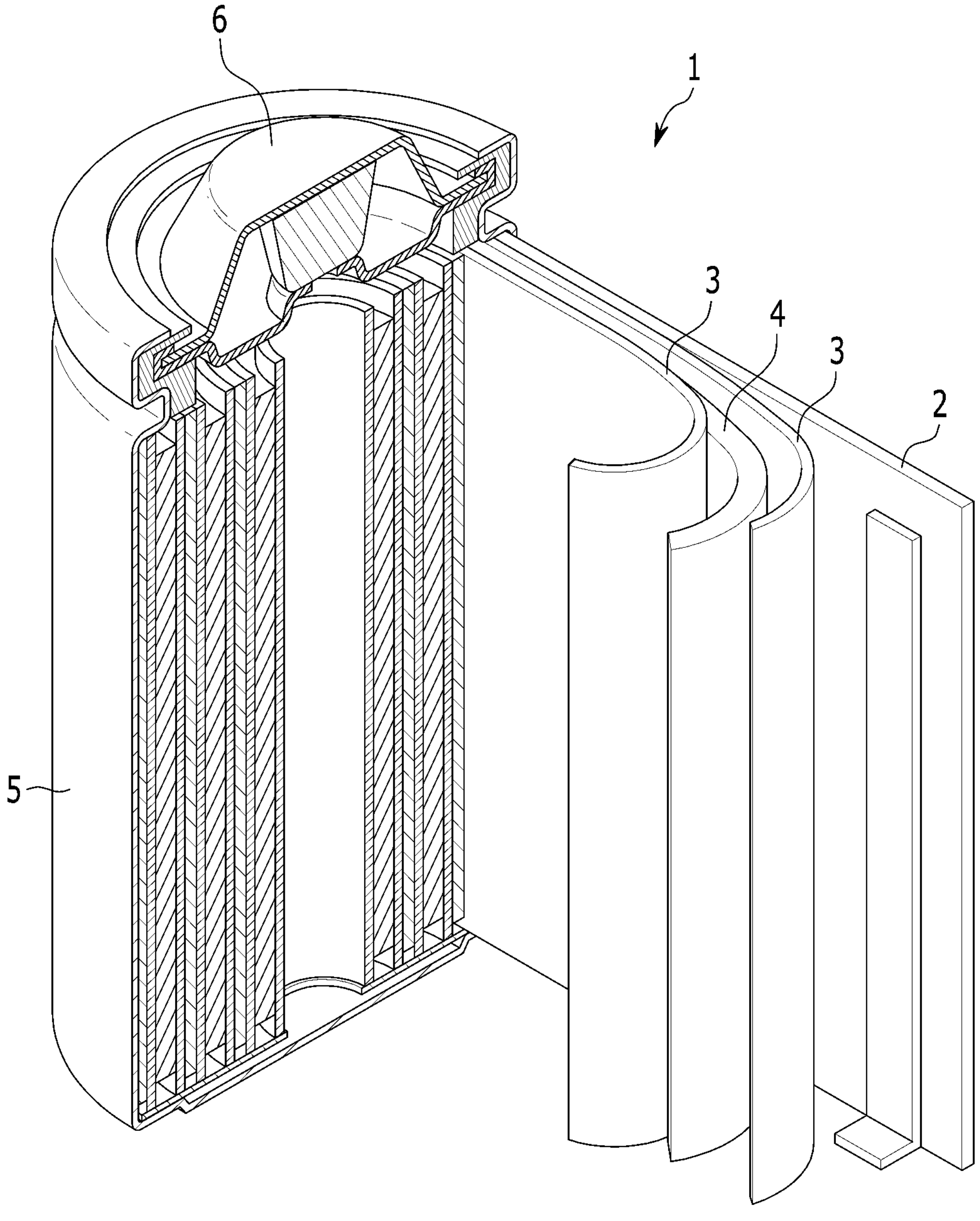

FIG. 2

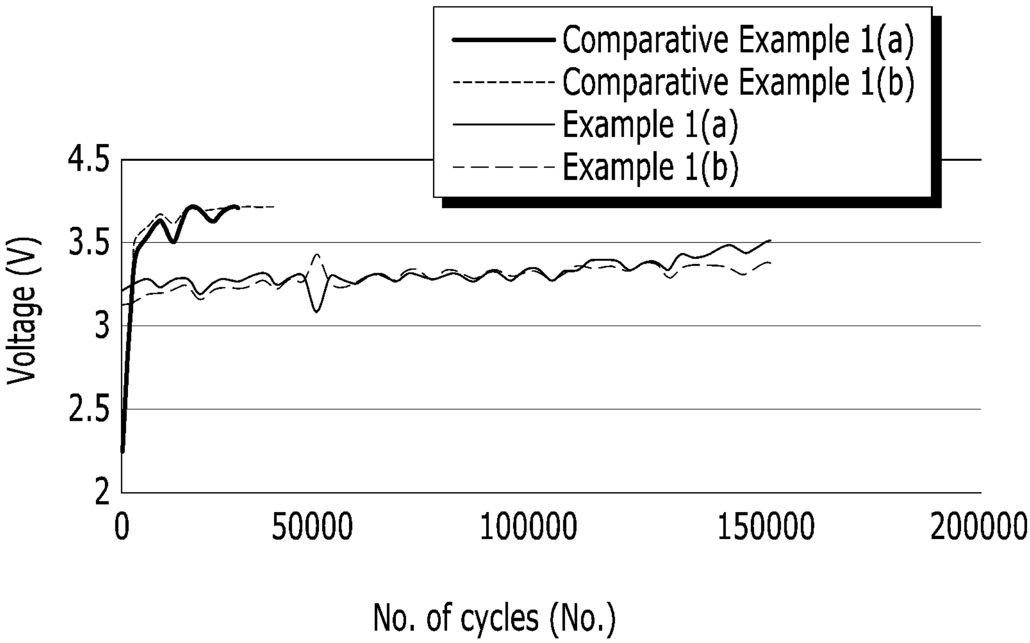
Comparative Example 1(a)
Comparative Example 1(b)
Example 1(a)
Example 1(b)
Voltage (V)
4.5
3.5
3
2.5
2
0
50000
100000
150000
200000
No. of cycles (No.)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008112594 A